# EUROPÄISCHE PATENTANMELDUNG

(11) **EP 1 571 018 A1**
(43) Veröffentlichungstag der Anmeldung: **07.09.2005**
(21) Anmeldenummer: 04030664.9
(22) Anmeldetag: 23.12.2004
(51) Int. Cl.: B60H 1/00, B60H 1/22

(54) **Bedienelementesystem für Fahrzeugheizgeräte**

(30) Priorität: 05.03.2004 DE 202004003461 U
(71) Anmelder: J. Eberspächer GmbH Co. KG, 73730 Esslingen (DE)
(72) Erfinder: Humburg, Michael, 73035 Göppingen (DE); Stangl, Markus, 73272 Neidlingen (DE)
(74) Vertreter: Ruttensperger, Bernhard

(57) **Zusammenfassung**

Ein Bedienelementensystem, insbesondere für Fahrzeugheizgeräte, umfasst eine Mehrzahl verschieden konfigurierter Bedienelemente (12, 14, 16, 18, 20, 22), die jeweils eine Mehrzahl von Funktionsgruppen aufweisen, wobei verschieden konfigurierte Bedienelemente (12, 14, 16, 18, 20, 22) sich durch verschiedene Funktionsgruppenkombinationen unterscheiden.

## Beschreibung

Die vorliegende Erfindung betrifft ein Bedienelementensystem, beispielsweise ein Bedienelementensystem, das für Fahrzeugheizgeräte vorgesehen ist.

Die Hersteller von zu bedienenden Systemen, wie z. B. die in Fahrzeugen als Standheizung oder Zuheizer eingesetzten Heizgeräte, bieten im Allgemeinen verschiedene Möglichkeiten der Bedienung an. Diese unterscheiden sich im Allgemeinen in der Funktionalität. So können beispielsweise sehr einfach ausgestaltete Bedienelemente mit einer minimalen Bedienmöglichkeit vorgesehen sein, beispielsweise um ein Gerät nur ein- oder auszuschalten. Es können aber auch komplexere Bedienelemente mit Programmiermöglichkeiten, mit Anzeigemöglichkeit usw. vorgesehen sein. Je nachdem, für welches dieser Bedienelemente ein Benutzer sich entscheidet, wird selbstverständlich auch der Preis des Gesamtsystems variieren. Um derartige Möglichkeiten bereitzuhalten, zu bedienende Systeme durch verschieden konfigurierte Bedienelemente bedienen zu können, von welchen im Allgemeinen der Benutzer sich eines auswählen wird, ist ein vergleichsweise großer Entwicklungsaufwand erforderlich, da je nach der gewünschten Funktionalität eines derartigen Bedienelementes im Allgemeinen verschiedene Hardware-Bestandteile und auch verschiedene Software-Komponenten erforderlich sind.

Es ist die Aufgabe der vorliegenden Erfindung, ein Bedienelementensystem, insbesondere für Fahrzeugheizgeräte vorzusehen, mit welchen in einfacher und kostengünstiger Art und Weise die Möglichkeit geschaffen wird, eine hohe Variabilität bei den Bedienelementen dieses Systems bereitzuhalten.

Erfindungsgemäß wird diese Aufgabe gelöst durch ein Bedienelementensystem, insbesondere für Fahrzeugheizgeräte, umfassend eine Mehrzahl verschieden konfigurierter Bedienelemente, die jeweils eine Mehrzahl von Funktionsgruppen aufweisen, wobei verschieden konfigurierte Bedienelemente sich durch verschiedene Funktionsgruppenkombinationen unterscheiden.

Bei dem erfindungsgemäßen Bedienelementensystem sind die einzelnen Bedienelemente oder zumindest ein Teil davon modulartig ausgestaltet, so dass durch Zusammengruppieren verschiedener Module, die jeweilige Funktionsgruppen repräsentieren, verschiedene Bedienelemente generiert werden können. Diese verschiedenen Bedienelemente unterscheiden sich in ihrer Funktionalität und können somit in einem Bereich von einer minimal erforderlichen Anzahl an Funktionen bis zu einer "Luxusversion" mit der maximal möglichen bzw. sinnvollen Anzahl an Funktionen variieren. Durch das Bereithalten von Modulen zum Aufbau verschiedener Bedienelemente kann der Entwicklungsaufwand und auch der Fertigungsaufwand gegenüber einer individuellen Entwicklung bzw. dem individuellen Aufbau einzelner Bedienelemente deutlich gesenkt werden.

Beispielsweise kann vorgesehen sein, dass die bedienelementenspezifische Ausführung einer Funktionsgruppe durch Adaptieren einer bedienelementenneutralen Grundform der Funktionsgruppe bereitgestellt ist. Dies kann beispielsweise dadurch erlangt werden, dass die bedienelementenspezifische Ausführung einer Funktionsgruppe durch Adaptieren einer bedienelementenneutralen Grundform der Funktionsgruppe bereitgestellt ist.

Durch das Bereithalten von grundsätzlich noch nicht individualisierten Grundformen verschiedener Funktionsgruppen wird erlangt, dass lediglich noch minimale bzw. mit einem vertretbaren Aufwand durchführbare Anpassungsmaßnahmen erforderlich sind, um bei der Eingliederung einer derartigen Funktionsgruppe in ein Gesamtsystem eines Bedienelements dann die erforderlichen Anpassungen an andere in diesem Bedienelement vorgesehenen Funktionsgruppen bzw. an die gewünschte Funktionalität zu erlangen.

Bei dem erfindungsgemäßen System kann weiter vorgesehen sein, dass die Mehrzahl von Bedienelementen stationäre Bedienelemente und mobile Bedienelemente umfasst und dass wenigstens eine Funktionsgruppe sowohl bei stationären als auch bei mobilen Bedienelementen vorgesehen ist.

Eine sinnvolle und brauchbare lndividualisierung der einzelnen Bedienelemente durch Zusammenfassung von mehreren durch jeweilige Funktionsgruppen repräsentierten Modulen kann beispielsweise dadurch erlangt werden, dass die Bedienelemente eine oder mehrere der folgenden Funktionsgruppen aufweisen: eine Gehäusefunktionsgruppe, eine Stromversorgungs-Funktionsgruppe, eine Tastatur-Funktionsgruppe, eine Anzeige-Funktionsgruppe, eine Anzeigebeleuchtungs-Funktionsgruppe, eine Anschluss-Funktionsgruppe, eine Funktionsgruppe, welche die Schnittstelle zu einem zu bedienenden System repräsentiert, eine Funktionsgruppe, welche Betriebsinformation für das zu bedienende System beinhaltet.

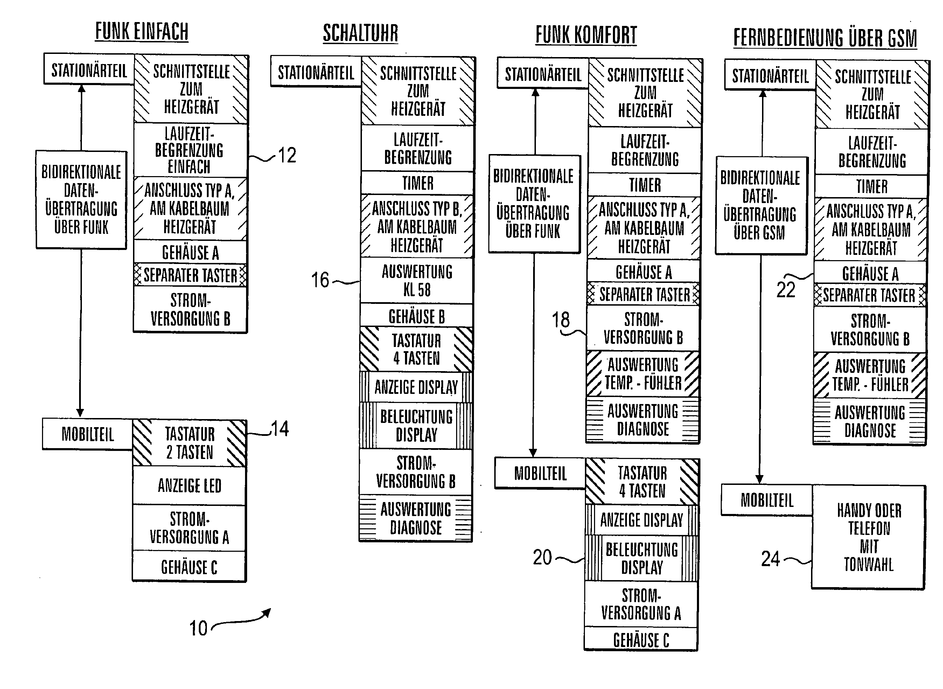

Das erfindungsgemäße Bedienelementensystem wird nachfolgend mit Bezug auf die beiliegende Figur detailliert beschrieben. Diese Figur zeigt ein Bedienelementensystem, bei dem die einzelnen Bedienelemente durch Zusammengruppieren verschiedener Module bzw. Funktionsgruppen aufgebaut sind.

In dieser Figur ist ein Bedienelementensystem 10 gezeigt, das vier verschiedene Möglichkeiten der Bedienung eines zu bedienenden Systems, hier eines Fahrzeugheizgeräts, darstellt. Diese vier Möglichkeiten sind bezeichnet als "Funk einfach", "Schaltuhr", "Funk Komfort" und "Fernbedienung über GSM". Wie im Folgenden dargelegt wird, sind die einzelnen Bedienelemente 12, 14, 16, 18, 20, 22 dieser verschiedenen Bedienmöglichkeiten modulartig aus jeweils mehreren Funktionsgruppen aufgebaut.

Zunächst wird Bezug genommen auf die Version "Funk einfach". Man erkennt, dass diese Version zwei Bedienelemente 12, 14 umfasst, von welchen das Bedienelement 12 als Stationärteil bezeichnet ist, da es beispielsweise in einem Kraftfahrzeug fest montiert ist, während das Bedienelement 14 als Mobilteil bezeichnet ist, also als eine Funkfernbedienung, die ein Benutzer mit sich tragen kann. Stationärteil 12 und Mobilteil 14 können über Funk bidirektional Daten übertragen, so dass einerseits vom Mobilteil aus eine Bedienung des Stationärteils bzw. des dadurch zu bedienenden Systems, also des Fahrzeugheizgeräts, erfolgen kann, während andererseits das Mobilteil vom Stationärteil Information beispielsweise über den Betriebszustand des zu bedienenden Systems empfangen kann.

Das Stationärteil umfasst, wie bereits ausgeführt, verschiedene Funktionsgruppen. So ist eine Funktionsgruppe als "Gehäuse A" bezeichnet. Diese Funktionsgruppe repräsentiert also allgemein das Gehäuse dieses Stationärteils, welches verschiedene andere Funktionsgruppen aufnimmt bzw. enthält und mit welchem das Stationärteil 12 an dem Fahrzeug angebracht ist. Ferner ist eine Funktionsgruppe "Stromversorgung B" vorgesehen, welche im Wesentlichen den Anschluss an ein Bordspannungssystem repräsentiert. Eine weitere Funktionsgruppe ist repräsentiert durch "Anschlusstyp A, am Kabelbaumheizgerät". Diese Funktionsgruppe definiert im Wesentlichen den Typ des Steckverbindungsanschlusses, über welchen eine Verbindung zum Heizgerät hergestellt wird. Die Kommunikation zwischen dem Stationärteil 12 und dem Heizgerät ist über die Funktionsgruppe "Schnittstelle zum Heizgerät" repräsentiert, welche einerseits die leitungsmäßige Anbindung sicherstellt, andererseits auch die Kommunikationssoftware repräsentiert, die erforderlich ist, um Ansteuerbefehle einerseits und Rückkopplungsinformation über den Betriebszustand andererseits zwischen dem Stationärteil 12 und dem Heizgerät zu übertragen. Eine weitere Funktionsgruppe ist repräsentiert durch "Laufzeitbegrenzung einfach". Diese Funktionsgruppe stellt bei dieser Version eines Bedienelements sicher, dass nach dem Aktivieren des Fahrzeugheizgeräts dieses nur für eine fest vorgegebene und im Allgemeinen durch einen Benutzer nicht variierbare Laufzeit betrieben wird. Nach Ablauf dieser Laufzeit wird das Heizgerät deaktiviert. Eine weitere Funktionsgruppe ist "Separater Taster". Dieser am Stationärteil 12 vorgesehene Taster ermöglicht das Einschalten und das Ausschalten des Heizgeräts vom Stationärteil 12 aus.

Das Mobilteil 14 dieser Version "Funk einfach" beinhaltet eine Funktionsgruppe "Gehäuse C", welche im Wesentlichen wieder das für das Mobilteil vorgesehene Gehäuse definiert. Auch ist eine Funktionsgruppe "Stromversorgung A" vorgesehen, welche hier beispielsweise durch eine Batterie und die entsprechende Anschlussmöglichkeit repräsentiert sein kann. Es ist weiter eine Funktionsgruppe "Tastatur 2 Tasten" vorgesehen. Durch diese Funktionsgruppe "Tastatur 2 Tasten" kann durch Funk ein Befehl an das Stationärteil 12 gesandt werden, welcher das Einschalten des Heizgeräts oder das Ausschalten des Heizgeräts nach sich zieht. Die Funktionsgruppe Anzeige LED" ermöglicht einerseits die Anzeige des Betriebszustands des Stationärteils bzw. des dadurch zu bedienenden Systems, ermöglicht andererseits beispielsweise aber auch die Anzeige des Ladezustands der in der "Stromversorgung A" vorhandenen Energiequelle, also beispielsweise Batterien oder Akkus.

Mit dieser Version "Funk einfach" ist es möglich, entweder vom Fahrzeug selbst aus über das Stationärteil 12 oder vom Mobilteil aus ein Heizgerät einzuschalten oder auszuschalten. Die Möglichkeit der Programmierung eines Startzeitpunkts ist hier nicht gegeben.

Eine Erweiterung dieser Version "Funk einfach" ist repräsentiert durch die Version "Funk Komfort". Auch hier sind als allgemein erforderliche Funktionsgruppen die Schnittstelle zum Heizgerät, die Stromversorgung B, das Gehäuse A sowie der Anschlusstyp A zum Kabelbaum vorhanden. Anstelle des bei "Funk einfach" vorhandenen Moduls der nicht programmierbaren bzw. veränderbaren Laufzeitbegrenzung ist hier ein Modul bzw. eine Funktionsgruppe "Laufzeitbegrenzung" zusammen mit einem Modul "Timer" vorhanden. Das hier vorhandene Modul "Laufzeitbegrenzung" ermöglicht die benutzerdefinierte Vorgabe einer gewünschten Laufzeit. Das Modul "Timer" ermöglicht die Eingabe eines bestimmten Startzeitpunkts, so dass hier im Voraus der Betrieb des anzusteuemden Heizgeräts definiert vorgegeben werden kann. Ferner enthält diese Komfortversion verschiedene Auswertemodule. So kann beispielsweise das von einem Temperaturfühler des Heizgeräts gelieferte Signal hinsichtlich der Flammerkennung oder allgemein des Betriebs des Heizgeräts ausgewertet werden. Auch kann in einem Modul bzw. einer Funktionsgruppe "Auswertung Diagnose" eine Betriebsdiagnose des Heizgeräts und ggf. auch des Bedienelements selbst erfolgen, um möglicherweise fehlerhafte Zustände erkennen zu können.

Bei dem in dieser Version "Funk Komfort" vorgesehenen Mobilteil 20 ist eine Erweiterung gegenüber dem Mobilteil 14 der Version "Funk einfach" dahingehend vorhanden, dass durch die Funktionsgruppe "Anzeige Display" und die dieser zugeordnete Funktionsgruppe "Beleuchtung Display" eine nummerische Anzeige erfolgen kann. Ferner ist hier eine Funktionsgruppe Tastatur 4 Tasten" vorhanden, durch welche beispielsweise ein Menüpunkt eines Bedienmenüs ausgewählt werden kann und dann in dem Menüpunkt verschiedene Veränderungen vorgenommen werden können, wie z. B. die Laufzeit oder die Startzeit eingegeben bzw. gelöscht werden können. Auch können auf dem bei diesem Mobilteil 20 vorgesehenen Display selbstverständlich die vom Stationärteil 18 gelieferten Informationen, wie z. B. die Temperatur des Heizgeräts oder eine erfasste Temperatur des Fahrzeuginnenraums angezeigt werden. Das Modul "Beleuchtung Display" kann beispielsweise so ausgelegt sein, dass es bei erkannter Betätigung von einer der Tasten der Funktionsgruppe "Tastatur 4 Tasten" aktiviert wird und somit ab dem Aktivierungszeitpunkt bzw. der ersten Tastenberührung dann ein beleuchtetes Display zur Verfügung steht.

Bei der Version "Fernbedienung über GSM" kann das dort vorgesehene Stationärteil 22 grundsätzlich ebenso ausgebildet sein, wie das Stationärteil 18 der Version "Funk Komfort". Anstelle des Mobilteils kann hier jedoch ein Mobiltelefon eingesetzt werden, bei welchem beispielsweise durch entsprechende Tastenbelegung die gewünschten Befehle erzeugt werden können und dann über das Mobilfunknetz zum Stationärteil übertragen werden können, während bei den beiden vorangehend beschriebenen Varianten diese Bedienung über Funk erfolgt. Der Vorteil dieser dritten Version ist, dass auch über größere Strecken hinweg eine Wechselwirkung zwischen Mobilteil 24 und dem Stationärteil 22 erzeugt werden kann.

Die Version "Schaltuhr" ist eine Version, bei welcher als Bedienelement nur ein Stationärteil 16 vorhanden ist, jedoch kein diesem zugeordnetes Mobilteil vorgesehen ist. Auch dieses Stationärteil 16 weist einige zur Wechselwirkung mit einem Heizgerät grundsätzlich erforderliche bzw. für den Betrieb grundsätzlich erforderliche Funktionsgruppen auf, wie z. B. die Schnittstelle zum Heizgerät, die Stromversorgung B, also den Anschluss an das Bordspannungssystem und ein Gehäuse B. Dieses Gehäuse B beinhaltet nunmehr auch die Funktionsgruppe "Tastatur 4 Tasten" sowie die Funktionsgruppe "Anzeige Display" und die dieser zugeordnete Funktionsgruppe "Beleuchtung Display". Dieses Stationärteil 16 der Version Schaltuhr" ist also ebenfalls fahrzeugfest zu montieren, und zwar so, dass es für einen Bediener sichtbar ist, so dass dieser auch in der Lage ist, die auf dem Display angezeigten Informationen abzulesen. Da hier eine im Sichtbereich des Fahrzeugbenutzers liegende Positionierung zu wählen ist, wird sich das hier vorgesehene Gehäuse B im Allgemeinen vom Gehäuse A der drei anderen Varianten unterscheiden, bei welchem diese Positionierung im Sichtbereich nicht erforderlich ist und somit auf das äußere Erscheinungsbild bzw. eine sehr kompakte Bauweise dieses Gehäuse nicht so sehr zu achten ist. Entsprechendes gilt für den Anschluss an den Kabelbaum des Heizgeräts. Hier ist eine Funktionsgruppe "Anschlusstyp B, am Kabelbaum Heizgerät" vorgesehen, welche aufgrund der Tatsache, dass hier ein kleiner bauendes Gehäuse B eingesetzt wird, eine entsprechend kleiner bauende Steckverbindung erforderlich macht. Da hier die Funktionsgruppe "Anzeige Display" fahrzeugfest installiert ist, kann durch eine Funktionsgruppe "Auswertung KL 58" eine Erkennung dahingehend erfolgen, ob bei dem Fahrzeug das Licht eingeschaltet ist. Ist dies der Fall, kann darauf geschlossen werden, dass die äußeren Bedingungen so sind, dass das Fahren mit Licht erforderlich ist, so dass in diesem Falle auch das Modul "Beleuchtung Display" aktiviert werden kann.

Aus der vorangehenden Beschreibung erkennt man, dass durch eine vergleichsweise geringe Anzahl an Funktionsgruppen bzw. Modulen durch geeignete Zusammengruppierung verschiedenste Bedienelemente geschaffen werden können. Für einen Anbieter derartiger Bedienelemente bzw. Bedienelementensysteme wird es somit möglich, bei der Entwicklung der einzelnen Funktionsgruppen bzw. Module bereits darauf zu achten, dass diese so gestaltet sind, dass sie eben in verschiedener Kombination miteinander eingesetzt werden können. Dies bedeutet aber, dass grundsätzlich die Module bzw. Funktionsgruppen so entwickelt werden können, dass sie zunächst bedienelementenneutral sind, d. h. zwar grundsätzlich hinsichtlich ihrer wesentlichen Funktionalität fertig gestellt sind, dann aber zum Integrieren in ein bestimmtes aufzubauendes Bedienelement noch gewisse Anpassungsmaßnahmen erforderlich sind. Dies sei beispielsweise mit Hinblick auf die Funktionsgruppe "Gehäuse C" der Mobilteile 14 bzw. 20 erläutert. Man erkennt, dass beim Mobilteil 14 eine Tastatur mit zwei Tasten vorgesehen ist, während beim Mobilteil 20 eine Tastatur mit vier Tasten vorgesehen ist. Das heißt, dass das Mobilteil 20 zwei Durchbrüche für Tasten im Gehäuse C mehr aufweisen muss, als das Mobilteil 14. Es kann also das Gehäuse C so aufgebaut werden, dass beim Gießvorgang bereits gewisse Sollbruchstellen für zu erzeugende Durchbrüche für Tastaturtasten bereitgestellt sind und dass erst dann, wenn ein derartiges Gehäuse oder ein Gehäuserohling zum Einsatz für ein bestimmtes der Mobilteile 14 oder 20 bestimmt ist, durch Herausnehmen der Durchbrüche noch abdeckenden Materialteile dann eine Fertigstellung dieser Funktionsgruppe erfolgt. Entsprechendes gilt insbesondere bei den Mobilteilen selbstverständlich auch hinsichtlich der Funktionsgruppe "Anzeige Display" bzw. der Funktionsgruppe "Anzeige LED". Bei Funktionsgruppen, die nicht nur Hardware darstellen, sondern Software oder eine Kombination von Software und Hardware darstellen, ist es beispielsweise möglich, die Software im Wesentlichen fertig zu stellen und dann lediglich durch Adaptierungsmaßnahmen, beispielsweise die Eingabe bestimmter Parameter anderer Funktionsgruppen, eine die Zusammengruppierung und die Wechselwirkung der verschiedenen Funktionsgruppen gestattende Anpassung vorzunehmen. Es sei in diesem Zusammenhang noch darauf hingewiesen, dass die verschiedenen Funktionsgruppen beispielsweise reine Hardware-Komponenten sein können, selbstverständlich aber auch als Software-Produkte oder eine Kombination aus Software und Hardware bereitgestellt sein können.

## Patentansprüche

1. Bedienelementensystem, insbesondere für Fahrzeugheizgeräte, umfassend eine Mehrzahl verschieden konfigurierter Bedienelemente (12, 14, 16, 18, 20, 22), die jeweils eine Mehrzahl von Funktionsgruppen aufweisen, wobei verschieden konfigurierte Bedienelemente (12, 14, 16, 18, 20, 22) sich durch verschiedene Funktionsgruppenkombinationen unterscheiden.

2. Bedienelementensystem nach Anspruch 1,
**dadurch gekennzeichnet, dass** wenigstens ein Teil der Funktionsgruppen für verschiedene der Bedienelemente (12, 14, 16, 18, 20, 22) bedienelementenspezifisch ausgeführt ist.

3. Bedienelementensystem nach Anspruch 2,
**dadurch gekennzeichnet, dass** die bedienelementenspezifische Ausführung einer Funktionsgruppe durch Adaptieren einer bedienelementenneutralen Grundform der Funktionsgruppe bereitgestellt ist.

4. Bedienelementensystem nach einem der Ansprüche 1 bis 3,
**dadurch gekennzeichnet, dass** die Mehrzahl von Bedienelementen (12, 14, 16, 18, 20, 22) stationäre Bedienelemente (12, 16, 18, 22) und mobile Bedienelemente (14, 20) umfasst und dass wenigstens eine Funktionsgruppe sowohl bei stationären als auch bei mobilen Bedienelementen (12, 14, 16, 18, 20, 22) vorgesehen ist.

5. Bedienelementensystem nach einem der Ansprüche 1 bis 4,
**dadurch gekennzeichnet, dass** die Bedienelemente (12, 14, 16, 18, 20, 22) eine oder mehrere der folgenden Funktionsgruppen aufweisen:
- eine Gehäusefunktionsgruppe,
- eine Stromversorgungs-Funktionsgruppe,
- eine Tastatur-Funktionsgruppe,
- eine Anzeige-Funktionsgruppe,
- eine Anzeigebeleuchtungs-Funktionsgruppe,
- eine Anschluss-Funktionsgruppe,
- eine Funktionsgruppe, welche die Schnittstelle zu einem zu bedienenden System repräsentiert,
- eine Funktionsgruppe, welche Betriebsinformation für das zu bedienende System beinhaltet.
